# EUROPÄISCHE PATENTANMELDUNG

(11) **EP 3 678 213 A1**
(43) Veröffentlichungstag der Anmeldung: **08.07.2020**
(21) Anmeldenummer: 19150490.1
(22) Anmeldetag: 07.01.2019
(51) Int. Cl.: H01M 2/10, H01M 2/20

(54) **ZELLHALTERAUFBAU ZUR HALTERUNG VON AKKUZELLEN**

(71) Anmelder: Andreas Stihl AG & Co. KG, 71336 Waiblingen (DE)
(72) Erfinder: HÄRTEL, Alexander, 71640 Ludwigsburg (DE); KOLB, Joachim, 71638 Ludwigsburg (DE)
(74) Vertreter: Patentanwälte Ruff, Wilhelm, Beier, Dauster & Partner mbB

(57) **Zusammenfassung**

1. Zellhalteraufbau zur Halterung von Akkuzellen.
2.1. Die Erfindung bezieht sich auf einen Zellhalteraufbau zur Halterung einer Mehrzahl von Akkuzellen, wobei der Zellhalteraufbau ein Halterbodenteil (1) und ein mit diesem verbindbares Halterdeckelteil (2) umfasst, die zusammen ein Feld von Zellenaufnahmeräumen (3) und zwischenliegenden Zellenzwischenräumen (4) bilden. Die Erfindung bezieht sich weiter auf einen Akkupack mit einem solchen Zellhalteraufbau.
2.2. In einer erfindungsgemäßen Ausführung weist das Halterbodenteil (1) eine oder mehrere bodenseitige Zellabstützsäulen (5) auf, die sich von einer Bodenebene (1a) des Halterbodenteils axial in zugeordnete Zellenzwischenräume (6) hinein erstrecken und einen umfangsseitigen Sicherungswandbereich (7) aufweisen, der zur axial und radial lagesichernden Anlage gegen eine Umfangsfläche von in den Zellenaufnahmeräumen (3) aufzunehmenden Akkuzellen konfiguriert ist, und/oder das Halterdeckelteil weist eine oder mehrere deckelseitige Zellabstützsäulen auf, die sich von einer Deckelebene des Halterdeckelteils axial in die Zellenzwischenräume hinein erstrecken und einen umfangsseitigen Sicherungswandbereich aufweisen, der zur axial und radial lagesichernden Anlage gegen eine Umfangsfläche von in den Zellenaufnahmeräumen (3) aufzunehmenden Akkuzellen konfiguriert ist.
2.3. Verwendung z.B. für Akkupacks zur elektrischen Energieversorgung handgeführter Garten- und/oder Forstbearbeitungsgeräte.

## Beschreibung

Die Erfindung bezieht sich auf einen Zellhalteraufbau zur Halterung einer Mehrzahl von Akkuzellen, wobei der Zellhalteraufbau ein Halterbodenteil und ein mit diesem verbindbares Halterdeckelteil umfasst, die zusammen ein Feld von Zellenaufnahmeräumen und zwischenliegenden Zellenzwischenräumen bilden. Die Erfindung bezieht sich weiter auf einen Akkupack mit einem solchen Zellhalteraufbau und mit durch diesen gehaltenen Akkuzellen.

Zellhalteraufbauten dieser Art sind in verschiedenen Ausführungen bekannt. Sie dienen dazu, die Akkuzellen zu halten, die typischerweise geeignet elektrisch seriell und/oder parallel verschaltet sind, um ein elektrisches Gerät mit elektrischer Energie zu versorgen. Dazu sind meist eine Vielzahl baugleicher Akkuzellen, typischerweise von kreiszylindrischer oder anderer langgestreckter Bauform, in den Zellenaufnahmeräumen des Zellhalteraufbaus angeordnet und gehalten, und der Zellhalteraufbau mit den eingebrachten Akkuzellen wird üblicherweise in einem Akkupack verwendet, z.B. in einem Gehäuse des Akkupacks angeordnet. Die Zellenaufnahmeräume sind in einem Feld angeordnet, d.h. in einer zweidimensionalen Anordnung, die typischerweise eine regelmäßige Anordnung ist, z.B. eine Rechteckgitter- oder Dreiecksgitter-Anordnung. Bei Bedarf können mehrere solche zweidimensionale Felder von Zellenaufnahmeräumen und zwischenliegenden Zellenzwischenräumen übereinanderliegend, d.h. mit zu einer Ebene des Feldes senkrechter Richtungskomponente versetzt, innerhalb des gleichen Zellhalteraufbaus oder unter Verwendung eines oder mehrerer weiterer Zellhalteraufbauten vorgesehen sein.

Der mit einem solchen Zellhalteraufbau und den in diesem gehaltenen Akkuzellen ausgerüstete Akkupack kann insbesondere zur elektrischen Energieversorgung eines handgeführten Elektrogerätes dienen, wie eines handgetragenen oder bodengeführten Garten- und/oder Forstbearbeitungsgerätes. Der Akkupack kann beispielsweise ein solcher sein, wie er in der älteren EP-Anmeldung Nr. 18194901.7 der Anmelderin offenbart ist, deren Inhalt hiermit durch Verweis zum Bestandteil der vorliegenden Offenbarung gemacht wird.

Ein Batteriepaket mit einem Zellhalteraufbau der eingangs genannten Art ist in der Offenlegungsschrift DE 10 2011 101 022 A1 offenbart. Der dortige Zellhalteraufbau ist speziell zur Halterung kreiszylindrischer Batteriezellen konfiguriert und mit seinen Zellenaufnahmeräumen dafür eingerichtet, alle Batteriezellen, d.h. Akkuzellen, mit gleicher Polrichtung aufzunehmen, d.h. dass z.B. der Pluspol sämtlicher Akkuzellen dem Halterbodenteil oder dem Halterdeckelteil zugewandt ist. Zur spielfreien Halterung der Akkuzellen in den Zellenaufnahmeräumen werden Federzungen am Halterbodenteil, die eine axiale Federkraft bereitstellen, und Federstege am Halterdeckelteil, die eine radiale Federkraft bereitstellen, vorgeschlagen. Zur gruppenweisen parallelen und seriellen elektrischen Verschaltung der Akkuzellen dienen plattenförmige Zellverbinder, die am Halterbodenteil bzw. am Halterdeckelteil montierbar und mit rechtwinklig abgebogenen Kontaktzungen versehen sind, die entlang einer Wandseite eines Gehäuses verlaufen, das vom Halterbodenteil und vier Wandseiten gebildet ist.

Der Erfindung liegt als technisches Problem die Bereitstellung eines Zellhalteraufbaus der eingangs genannten Art zugrunde, der mit relativ geringem Aufwand eine gegenüber dem oben erwähnten Stand der Technik verbesserte Halterung der Akkuzellen ermöglicht. Weiter liegt der Erfindung die Bereitstellung eines mit einem solchen Zellhalteraufbau ausgerüsteten Akkupacks zugrunde.

Die Erfindung löst dieses Problem durch die Bereitstellung eines Zellhalteraufbaus mit den Merkmalen des Anspruchs 1 oder 8 und eines Akkupacks mit den Merkmalen des Anspruchs 12. Vorteilhafte Weiterbildungen der Erfindung sind in den Unteransprüchen angegeben, deren Wortlaut hiermit durch Verweis zum Bestandteil der Beschreibung gemacht wird.

Gemäß einem Aspekt der Erfindung weist das Halterbodenteil, das auch als Halterrückseitenteil oder Haltervorderseitenteil oder Halterunterseitenteil oder Halteroberseitenteil bezeichnet werden kann, eine oder mehrere bodenseitige Zellabstützsäulen auf, die sich von einer Bodenebene des Halterbodenteils axial in zugeordnete Zellenzwischenräume hinein erstrecken und einen umfangsseitigen Sicherungswandbereich aufweisen, der zur axial und radial lagesichernden Anlage gegen eine Umfangsfläche von in den Zellenaufnahmeräumen aufzunehmenden Akkuzellen konfiguriert ist. Mit axial ist eine Längsrichtung der Zellenaufnahmeräume und damit auch der Akkuzellen gemeint, wenn diese in die Zellenaufnahmeräume eingesetzt sind, d.h. eine zur Bodenebene des Halterbodenteils nicht-parallele und vorzugsweise senkrechte Richtung. Mit radial ist eine zur Axialrichtung senkrechte, laterale Richtung bzw. Ebene gemeint. Die Zellenaufnahmeräume sind in ihrer Form an diejenige der Akkuzellen angepasst, z.B. zylindrisch oder quaderförmig. Mit bodenseitig ist gemeint, dass die betreffende Zellabstützsäule Bestandteil des Halterbodenteils ist. Somit können sich die Akkuzellen mit ihrer Umfangsfläche, typischerweise ihrer zylindrischen Mantelfläche, axial und radial lagegesichert gegen den umfangsseitigen Sicherungswandbereich einer bzw. bevorzugt mehrerer angrenzender bodenseitiger Zellabstützsäulen anlegen bzw. abstützen. Dies trägt in einer konstruktiv einfachen Weise zu einer zuverlässigen, spielfreien Halterung der Akkuzellen in den Zellenaufnahmeräumen am Halterbodenteil bei. Vorzugsweise ist eine Mehrzahl von solchen bodenseitigen Zellabstützsäulen vorgesehen. Zudem können die bodenseitigen Zellabstützsäulen dadurch verhindern, dass die Akkuzellen, wenn diese zunächst in das Halterbodenteil eingesetzt werden, unerwünschter Weise axial aus selbigem herausgelangen bzw. herausfallen können, bevor das Halterdeckelteil und das Halterbodenteil fertig aneinander montiert sind. Die Lagesicherung der jeweiligen Akkuzelle in axialer Richtung und in dazu senkrechter radialer, d.h. lateraler, Richtung am Halterbodenteil kann je nach Bedarf durch kraftschlüssige und/oder formschlüssige Anlage der einen oder mehreren angrenzenden, bodenseitigen Zellabstützsäulen realisiert sein. Der Sicherungswandbereich ist z.B. von einem Bereich einer Säulenmantelfläche der Zellabstützsäulen gebildet.

Gemäß einem weiteren Aspekt der Erfindung, der zusätzlich oder alternativ zum vorgenannten Erfindungsaspekt vorgesehen sein kann, weist das Halterdeckelteil, bei dem es sich um ein dem Halterbodenteil gegenüberliegend mit diesem verbindbares Bauteil handelt und das entsprechend auch als Haltervorderseitenteil oder Halterrückseitenteil oder Halteroberseitenteil oder Halterunterseitenteil bezeichnet werden kann, eine oder mehrere deckelseitige Zellabstützsäulen auf, die sich von einer Deckelebene des Halterdeckelteils axial in die Zellenzwischenräume hinein erstrecken und einen umfangsseitigen Sicherungswandbereich aufweisen, der zur axial und radial lagesichernden Anlage gegen eine Umfangsfläche von in den Zellenaufnahmeräumen aufzunehmenden Akkuzellen konfiguriert ist. Mit deckelseitig ist hierbei lediglich gemeint, dass die betreffende Zellabstützsäule Bestandteil des Halterdeckelteils ist. Somit können sich die Akkuzellen mit ihrer Umfangsfläche, typischerweise ihrer zylindrischen Mantelfläche, axial und radial lagegesichert gegen den umfangsseitigen Sicherungswandbereich einer bzw. bevorzugt mehrerer angrenzender deckelseitiger Zellabstützsäulen anlegen bzw. abstützen. Dies trägt in einer konstruktiv einfachen Weise zu einer zuverlässigen, spielfreien Halterung der Akkuzellen in den Zellenaufnahmeräumen am Halterdeckelteil bei. Vorzugsweise ist eine Mehrzahl von solchen deckelseitigen Zellabstützsäulen vorgesehen. Zudem können die deckelseitigen Zellabstützsäulen dadurch verhindern, dass die Akkuzellen, wenn diese zunächst in das Halterdeckelteil eingesetzt werden, unerwünschter Weise axial aus selbigem herausgelangen bzw. herausfallen können, bevor das Halterdeckelteil und das Halterbodenteil fertig aneinander montiert sind. Die Lagesicherung der jeweiligen Akkuzelle in axialer Richtung und in dazu senkrechter radialer, d.h. lateraler, Richtung am Halterdeckelteil kann je nach Bedarf durch kraftschlüssige und/oder formschlüssige Anlage der einen oder mehreren angrenzenden, deckelseitigen Zellabstützsäulen realisiert sein.

Gemäß einem weiteren Aspekt der Erfindung, der zusätzlich oder alternativ zu einem oder mehreren der vorgenannten Erfindungsaspekte vorgesehen sein kann, besitzen die Zellenaufnahmeräume in einem mittleren Bereich des Feldes eine größere lichte Aufnahmeweite als in einem peripheren Bereich des Feldes. Es versteht sich, dass sich diese Eigenschaft ebenso wie andere vorliegend genannte Eigenschaften des Zellhalteraufbaus, soweit nichts anderes gesagt ist oder sich dies für den Fachmann ohne weiteres versteht, auf einen Vormontagezustand bezieht, in dem die Akkuzellen noch nicht in die Zellenaufnahmeräume eingefügt sind oder jedenfalls das Halterdeckelteil und das Halterbodenteil noch nicht miteinander verbunden und die Akkuzellen in den Zellenaufnahmeräumen abgestützt gehalten sind. Diese Maßnahme kann vorteilhaft dazu beitragen, Akkuzellen im mittleren Bereich des Feldes auch dann mit in etwa gleich großer Abstützkraft bzw. Anpresskraft, d.h. in etwa gleich großem Abstützdruck bzw. Anpressdruck, in den Zellenaufnahmeräumen zu halten wie im peripheren Bereich des Feldes, wenn bei der Montage des Halterdeckelteils am Halterbodenteil in den Zellenaufnahmeräumen geringfügige laterale Verformungen der Zellabstützsäulen durch die dagegen zur Anlage kommenden Akkuzellen auftreten. Solche geringfügigen lateralen Verformungen der Zellabstützsäulen könnten ansonsten dazu führen, dass sich für Akkuzellen im mittleren Bereich des Feldes höhere Kraftbelastungen durch den Abstütz-/Anpressdruck der Zellabstützsäulen ergeben als für Akkuzellen im peripheren Bereich des Feldes. Diesem Effekt wird dadurch entgegengewirkt, dass den Akkuzellen in einem mittleren Bereich des Feldes eine etwas größere lichte Aufnahmeweite durch die Zellenaufnahmeräume zur Verfügung gestellt wird als für die Akkuzellen im peripheren Bereich des Feldes.

In einer Weiterbildung der Erfindung verbreitert sich wenigstens eine der bodenseitigen Zellabstützsäulen wenigstens in einem axialen Teilbereich, der ihren Sicherungswandbereich enthält, konisch in Richtung der Bodenebene des Halterbodenteils. Diese Maßnahme kann ein zentriertes Einsetzen der Akkuzellen in den vom Halterbodenteil bereitgestellten Teil der Zellenaufnahmeräume vor der Montage des Halterdeckelteils am Halterbodenteil erleichtern und/oder das lagesichernde Anliegen der bodenseitigen Zellabstützsäule gegen die Umfangsfläche der Akkuzelle unterstützen. Vorzugsweise sind mehrere und bevorzugter alle bodenseitigen Zellabstützsäulen auf diese Weise im betreffenden axialen Teilbereich konisch gestaltet.

In einer Weiterbildung der Erfindung verbreitert sich wenigstens eine der deckelseitigen Zellabstützsäulen wenigstens in einem ihren Sicherungswandbereich enthaltenden axialen Teilbereich konisch in Richtung der Deckelebene des Halterdeckelteils. Diese Maßnahme kann ein zentriertes Einsetzen der Akkuzellen in den vom Halterdeckelteil bereitgestellten Teil der Zellenaufnahmeräume vor der Montage des Halterdeckelteils am Halterbodenteil erleichtern und/oder das lagesichernde Anliegen der deckelseitigen Zellabstützsäule gegen die Umfangsfläche der Akkuzelle unterstützen. Vorzugsweise sind mehrere und bevorzugter alle deckelseitigen Zellabstützsäulen auf diese Weise im betreffenden axialen Teilbereich konisch gestaltet.

In einer Weiterbildung der Erfindung ist wenigstens eine der bodenseitigen Zellabstützsäulen und/oder der deckelseitigen Zellabstützsäulen wenigstens in einem die Sicherungswandbereiche enthaltenden Säulenendbereich domförmig oder kegelstumpfförmig ausgebildet. Diese Maßnahme kann fertigungstechnisch und funktionell von Vorteil sein. Vorzugsweise sind mehrere der bodenseitigen Zellabstützsäulen und/oder mehrere der deckelseitigen Zellabstützsäulen und bevorzugter alle bodenseitigen Zellabstützsäulen und/oder alle deckelseitigen Zellabstützsäulen in dieser Weise an ihrem betreffenden Säulenendbereich domförmig oder kegelstumpfförmig ausgebildet. Die Kegelstumpfform bzw. Domform kann durch ihre Konizität das Einfügen der Akkuzellen in die Zellenaufnahmeräume erleichtern und ein zuverlässig axial und radial lagesicherndes Abstützen der Akkuzellen mit ihrer Umfangsfläche am zugeordneten umfangsseitigen Sicherungswandbereich der jeweiligen bodenseitigen und/oder deckelseitigen Zellabstützsäule begünstigen.

In einer Weiterbildung der Erfindung weist wenigstens eine der bodenseitigen Zellabstützsäulen eine Hohlsäulenstruktur auf, und ihr Sicherungswandbereich liegt zur Bodenebene des Halterbodenteils hin frei. Diese Säulenrealisierung ermöglicht vorteilhaft ein radial elastisches Nachgeben des Sicherungswandbereichs ungehindert von der Bodenebene des Halterbodenteils, wodurch sich der Sicherungswandbereich beim Einsetzen einer Akkuzelle in einen angrenzenden Zellenaufnahmeraum von der Akkuzelle radial elastisch wegdrücken lässt und sich dann mit rückstellendem Druck gegen die Umfangsfläche der Akkuzelle anlegt. Dies begünstigt die Bereitstellung einer vergleichsweise hohen Lagesicherungskraft gegen ein axiales und radiales Wegbewegen der Akkuzelle vom Halterbodenteil.

In einer Weiterbildung der Erfindung weist wenigstens eine der deckelseitigen Zellabstützsäulen eine Hohlsäulenstruktur auf, und ihr Sicherungswandbereich liegt zur Deckelebene des Halterdeckelteils hin frei. Diese Säulenrealisierung ermöglicht vorteilhaft ein radial elastisches Nachgeben des Sicherungswandbereichs ungehindert von der Deckelebene des Halterdeckelteils, wodurch sich der Sicherungswandbereich beim Einsetzen einer Akkuzelle in einen angrenzenden Zellenaufnahmeraum von der Akkuzelle radial elastisch wegdrücken lässt und sich dann mit rückstellendem Druck gegen die Umfangsfläche der Akkuzelle anlegt. Dies begünstigt die Bereitstellung einer vergleichsweise hohen Lagesicherungskraft gegen ein axiales und radiales Wegbewegen der Akkuzelle vom Halterdeckelteil.

In einer Weiterbildung der Erfindung weist wenigstens eine der bodenseitigen Zellabstützsäulen in ihrem Sicherungswandbereich einen zu einem der Zellenaufnahmeräume hin radial abstehenden Anlagevorsprung auf, und/oder wenigstens eine der deckelseitigen Zellabstützsäulen weist in ihrem Sicherungswandbereich einen zu einem der Zellenaufnahmeräume hin radial abstehenden Anlagevorsprung auf. Vorzugsweise sind mehrere und bevorzugter alle der bodenseitigen Zellabstützsäulen und/oder der deckelseitigen Zellabstützsäulen mit einem oder mehreren der von dem Sicherungswandbereich radial abstehenden Anlagevorsprüngen versehen. Der Anlagevorsprung kann sehr vorteilhaft das axial und radial lagesichernde Anliegen des betreffenden Sicherungswandbereichs gegen die eingesetzte Akkuzelle unterstützen bzw. verstärken. Beispielsweise kann er sich in entsprechenden Realisierungen mit einer Anlagekante am Umfang der Akkuzelle verkeilen oder verrasten oder verklemmen oder verkrallen und auf diese Weise die Akkuzelle sehr gut gegen axiales Herausbewegen gesichert festhalten.

In einer Weiterbildung der Erfindung weist zur Bereitstellung der größeren lichten Aufnahmeweite der Zellenaufnahmeräume in dem mittleren Bereich des Feldes gegenüber der kleineren lichten Aufnahmeweite der Zellenaufnahmeräume in dem peripheren Bereich des Feldes wenigstens eine der bodenseitigen Zellabstützsäulen und/oder der deckelseitigen Zellabstützsäulen in dem peripheren Bereich des Feldes eine größere radiale Abmessung auf als wenigstens eine der bodenseitigen Zellabstützsäulen und/oder der deckelseitigen Zellabstützsäulen in dem mittleren Bereich des Feldes.

Diese Maßnahme lässt sich konstruktiv in relativ einfacher Weise z.B. durch entsprechend unterschiedliche Gestaltung des Außendurchmessers der betreffenden Zellabstützsäulen realisieren. Vorzugsweise sind mehrere der bodenseitigen Zellabstützsäulen und/oder mehrere der deckelseitigen Zellabstützsäulen und bevorzugter alle bodenseitigen Zellabstützsäulen und/oder alle deckelseitigen Zellabstützsäulen in dem mittleren Bereich des Feldes in dieser Weise mit kleinerem Außendurchmesser gebildet als die bodenseitigen und/oder deckelseitigen Zellabstützsäulen in dem peripheren Bereich des Feldes. Die Durchmesservariation kann je nach Bedarf in Abhängigkeit vom Abstand der Zellabstützsäule von einem Mittelpunkt des Feldes oder von einem peripheren Rand des Feldes in einer oder wenigen Stufen oder quasi kontinuierlich gewählt werden.

In einer Ausgestaltung der Erfindung ist die besagte Maßnahme dadurch realisiert, dass der Anlagevorsprung wenigstens einer der bodenseitigen Zellabstützsäulen und/oder der deckelseitigen Zellabstützsäulen in dem peripheren Bereich des Feldes eine größere radiale Abmessung aufweist als der Anlagevorsprung wenigstens einer der bodenseitigen Zellabstützsäulen und/oder der deckelseitigen Zellabstützsäulen in dem mittleren Bereich des Feldes. Vorzugsweise sind mehrere der bodenseitigen Zellabstützsäulen und/oder mehrere der deckelseitigen Zellabstützsäulen und bevorzugter alle bodenseitigen Zellabstützsäulen und/oder alle deckelseitigen Zellabstützsäulen in dem mittleren Bereich des Feldes in dieser Weise mit dem Anlagevorsprung kleinerer Radialerstreckung gebildet als die bodenseitigen und/oder deckelseitigen Zellabstützsäulen in dem peripheren Bereich des Feldes. Die Variation der Radialabmessung des Anlagevorsprungs kann je nach Bedarf in Abhängigkeit vom Abstand der Zellabstützsäule von einem Mittelpunkt des Feldes oder von einem peripheren Rand des Feldes in einer oder wenigen Stufen oder quasi kontinuierlich gewählt werden.

Vorzugsweise sind mehrere und bevorzugter alle der bodenseitigen Zellabstützsäulen und/oder der deckelseitigen Zellabstützsäulen in dem peripheren Bereich des Feldes mit einem oder mehreren der von einer Säulenmantelfläche radial abstehenden Anlagevorsprüngen versehen. Außerdem sind bevorzugt mehrere und bevorzugter alle der bodenseitigen Zellabstützsäulen und/oder der deckelseitigen Zellabstützsäulen in dem mittleren Bereich des Feldes mit einem oder mehreren der von der Säulenmantelfläche radial abstehenden Anlagevorsprüngen versehen, deren radiale Abmessung kleiner ist als diejenige des oder der Anlagevorsprünge der einen oder mehreren Zellabstützsäulen in dem peripheren Bereich des Feldes. Alternativ weist die jeweilige bodenseitige und/oder deckelseitige Zellabstützsäule in dem mittleren Bereich des Feldes keinen solchen Anlagevorsprung auf. Die Anlagevorsprünge können z.B. als punktförmige Vorsprünge bzw. Höcker oder Nasen oder als linienförmige, umfangsseitig und/oder axial verlaufende Stege realisiert sein.

In einer Weiterbildung der Erfindung besitzt wenigstens eine der bodenseitigen Zellabstützsäulen eine größere Länge als die deckelseitigen Zellabstützsäulen. Vorzugsweise besitzen mehrere und bevorzugter alle bodenseitige Zellabstützsäulen eine größere Säulenlänge als die deckelseitigen Zellabstützsäulen. Die größere Länge der bodenseitigen Zellabstützsäulen gegenüber den deckelseitigen Zellabstützsäulen kann den Montagevorgang dadurch begünstigen, dass sie über eine entsprechend große axiale Länge als seitliche Begrenzungen fungieren können, wenn die Akkuzellen in das Halterbodenteil eingelegt werden, genauer gesagt in den vom Halterbodenteil bereitgestellten Teil der Zellenaufnahmeräume, bevor dann das Halterdeckelteil am Halterbodenteil montiert wird. Durch ihre größere Länge können die bodenseitigen Zellabstützsäulen die lose eingelegten Akkuzellen in diesem Vormontagezustand sicher im jeweiligen Zellenaufnahmeraum halten, solange das Halterbodenteil nicht zu stark gekippt wird.

Gemäß einem weiteren Aspekt der Erfindung, der zusätzlich oder alternativ zu jedem der oben genannten Erfindungsaspekte vorgesehen sein kann, sind die Zellenaufnahmeräume zur polrichtungsunabhängig axial lagegleichen Aufnahme der Akkuzellen eingerichtet, und es ist wenigstens ein plattenförmiger Zellverbinder vorgesehen, der am Halterbodenteil oder am Halterdeckelteil montierbar ist und jeweils mindestens eine positive Polkontaktzone und mindestens eine negative Polkontaktzone aufweist, wobei die positive Polkontaktzone und die negative Polkontaktzone mit unterschiedlicher Kontaktzonenhöhe von einer Plattenebene des Zellverbinders abstehen.

Diese Maßnahme ermöglicht eine sehr vorteilhafte Realisierung einer in einer gewünschten Weise elektrisch parallel und seriell verschalteten Akkuzellenanordnung unter Verwendung dieses Zellhalteraufbaus. Dazu können die Akkuzellen bereits gruppenweise mit entgegengesetzten Polrichtungen in die hierfür geeignet eingerichteten Zellenaufnahmeräume so eingebracht werden, dass sie dort in im Wesentlichen gleicher axialer Lage aufgenommen sind, d.h. alle Akkuzellen haben mit ihren axialen Stirnrändern im Wesentlichen die gleiche axiale Lage unabhängig davon, ob sie z.B. mit ihrem Pluspol in Richtung Halterbodenteil oder in Richtung Halterdeckelteil weisen. Mit der unterschiedlichen Kontaktzonenhöhe seiner positiven bzw. negativen Polkontaktzone trägt der plattenförmige Zellverbinder der Tatsache Rechnung, dass bei den typischen, in diesem Fall verwendeten Akkuzellen der Pluspol mit einem anderen axialen Abstand vom zugewandten axialen Stirnrand der Akkuzelle abschließt wie der Minuspol.

So steht oftmals der Pluspol der Akkuzelle axial weiter über den axialen Stirnrand der Akkuzelle vor als der Minuspol, so dass bei zwei axial lagegleich, aber mit entgegengesetzter Polungsrichtung in ihren Zellenaufnahmeräumen aufgenommenen Akkuzellen der Pluspol der einen Akkuzelle an der betreffenden Seite über den Minuspol der anderen Akkuzelle axial vorsteht. Dies kann der plattenförmige Zellverbinder durch seine unterschiedlichen Kontaktzonenhöhen der positiven Polkontaktzone, die zur elektrischen Kontaktierung mit einem Akkuzellen-Pluspol dient, und der negativen Polkontaktzone, die zur elektrischen Kontaktierung mit einem Akkuzellen-Minuspol dient, ausgleichen.

In einer Weiterbildung der Erfindung ist eine Mehrzahl von baugleichen Zellverbindern vorgesehen, die wahlweise am Halterbodenteil oder am Halterdeckelteil montierbar sind. Dies bedeutet, dass baugleiche Zellverbinder zur Montage am Halterbodenteil und am Halterdeckelteil verwendet werden können, was die Fertigung von speziell nur am Halterbodenteil oder nur am Halterdeckelteil montierbaren Zellverbindern überflüssig macht.

In einer Weiterbildung der Erfindung ist der jeweilige Zellverbinder mittels einer Klemm- und/oder Schnappverbindung am Halterbodenteil oder am Halterdeckelteil montierbar. Dies stellt eine vorteilhaft einfache und funktionssichere Verbindung des Zellverbinders am Halterbodenteil bzw. am Halterdeckelteil dar.

In einer Weiterbildung der Erfindung sind korrespondierende Positioniermarken am Zellverbinder einerseits und am Halterbodenteil und/oder am Halterdeckelteil andererseits zur positionsrichtigen Montage des Zellverbinders am Halterbodenteil bzw. am Halterdeckelteil vorgesehen. Dies vereinfacht das Anbringen des Zellverbinders am Halterbodenteil bzw. am Halterdeckelteil, indem die korrespondierenden Positioniermarken eine Fehlpositionierung des Zellverbinders bei der Montage verhindern.

Der erfindungsgemäße Akkupack umfasst einen erfindungsgemäßen Zellhalteraufbau und eine Mehrzahl von durch den Zellhalteraufbau gehaltenen Akkuzellen. Die Akkuzellen sind in diesem Zellhalteraufbau wie oben erläutert sicher und spielfrei gehalten. Der Akkupack eignet sich dadurch insbesondere auch für Anwendungen, bei denen der Akkupack Erschütterungen bzw. Stoßeinwirkungen unterworfen sein kann. Insbesondere eignet sich der Akkupack zur elektrischen Energieversorgung handgeführter Elektrogeräte wie hand- oder rückgetragenen oder bodengeführten, elektrisch angetriebenen Garten- und Forstbearbeitungsgeräten.

Vorteilhafte Ausführungsformen der Erfindung sind in den Zeichnungen dargestellt. Diese und weitere vorteilhafte Ausführungsformen der Erfindung werden nachfolgend näher erläutert. Hierbei zeigen:
- Fig. 1: eine Draufsicht auf ein Halterbodenteil eines Zellhalteraufbaus zur Halterung von Akkuzellen,
- Fig. 2: eine Seitenansicht des Halterbodenteils von Fig.1,
- Fig. 3: eine Draufsicht auf ein Halterdeckelteil des Zellhalteraufbaus,
- Fig. 4: eine Seitenansicht des Halterdeckelteils von Fig. 3,
- Fig. 5: eine ausschnittweise perspektivische Draufsicht auf das Halterbodenteil,
- Fig. 6: eine ausschnittweise perspektivische Draufsicht auf das Halterdeckelteil,
- Fig. 7: eine ausschnittweise Längsschnittansicht des Halterbodenteils,
- Fig. 8: eine ausschnittweise Längsschnittansicht des Halterdeckelteils,
- Fig. 9: eine ausschnittweise Draufsicht auf das Halterbodenteil im Bereich eines Zellenaufnahmeraums,
- Fig. 10: eine Schnittansicht längs einer Linie X-X von Fig. 1 in einem fertig montierten Zustand des Zellhalteraufbaus mit Akkuzellen,
- Fig. 11: eine Schnittansicht längs einer Linie XI-XI von Fig. 1 im fertig montierten Zustand des Zellhalteraufbaus mit Akkuzellen,
- Fig. 12: eine Schnittansicht längs einer Linie XII-XII von Fig. 1 im fertig montierten Zustand des Zellhalteraufbaus mit Akkuzellen,
- Fig. 13: eine ausschnittweise Draufsicht auf das Halterbodenteil in einem Bereich mit sechs Zellenaufnahmeräumen,
- Fig. 14: eine ausschnittweise Perspektivansicht des Halterbodenteils im Bereich einer Positionsmarke,
- Fig. 15: eine Draufsicht auf einen plattenförmigen Zellverbinder mit je drei positiven und negativen Polkontaktzonen,
- Fig. 16: eine Seitenansicht des Zellverbinders von Fig. 15,
- Fig. 17: eine ausschnittweise Draufsicht auf das Halterbodenteil in einem peripheren Bereich,
- Fig. 18: eine Perspektivansicht eines plattenförmigen Zellverbinders mit drei gleichen Polkontaktzonen,
- Fig. 19: eine perspektivische Vorderansicht eines Akkuzellenblocks mit montiertem Zellhalteraufbau mit eingebrachten Akkuzellen,
- Fig. 20: eine perspektivische Rückansicht des Akkuzellenblocks und
- Fig. 21: eine schematische perspektivische Explosionsansicht eines Akkupacks mit Gehäuse und darin aufgenommenem Akkuzellenblock.

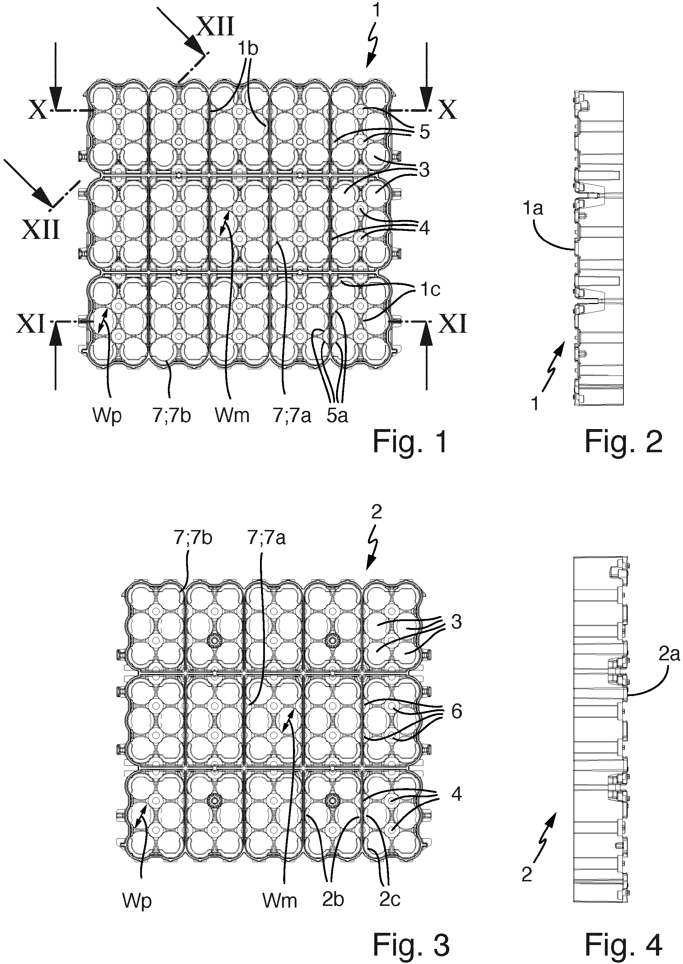

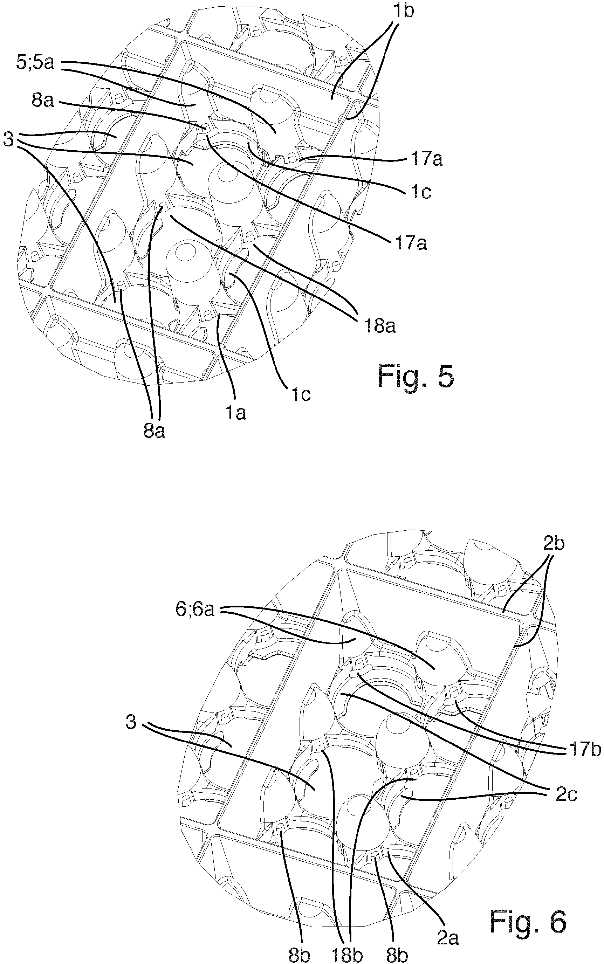

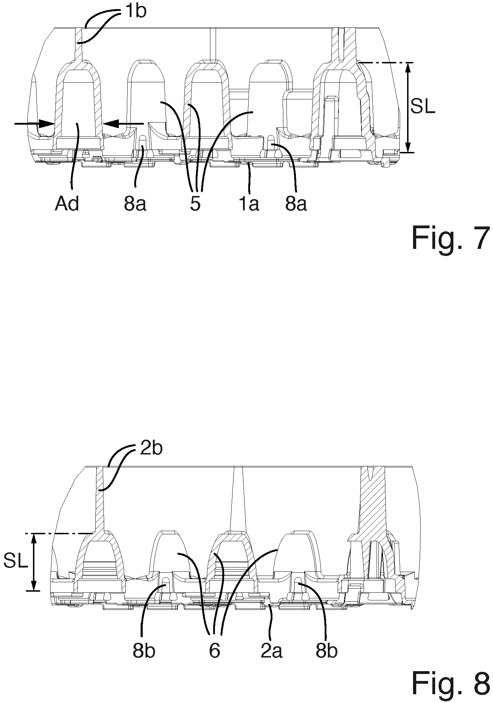

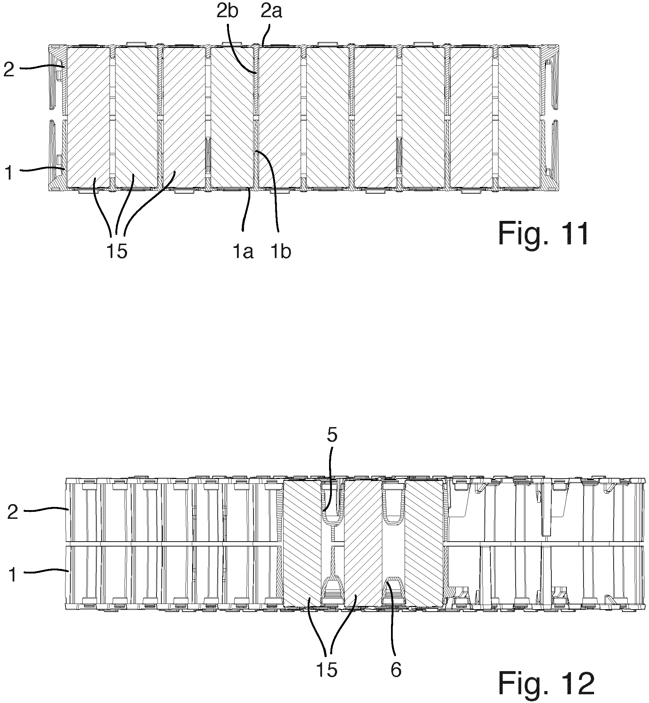

Der in den Figuren 1 bis 18 mit seinen verschiedenen Bestandteilen in verschiedenen Ansichten gezeigte Zellhalteraufbau dient zur Halterung einer Mehrzahl von Akkuzellen für einen Akkupack und umfasst ein Halterbodenteil 1 und ein mit diesem verbindbares Halterdeckelteil 2, die zusammen ein Feld 7, d.h. eine vorzugsweise regelmäßige zweidimensionale Anordnung, von Zellenaufnahmeräumen 3 und zwischenliegenden Zellenzwischenräumen 4 bilden.

In entsprechenden Ausführungen weist das Halterbodenteil 1 wie im gezeigten Beispiel eine oder mehrere bodenseitige Zellabstützsäulen 5 auf, die sich jeweils von einer Bodenebene 1a des Halterbodenteils 1 axial in einen der Zellenzwischenräume 4 hinein erstrecken und einen umfangsseitigen Sicherungswandbereich 5a aufweisen, der zur axial und radial lagesichernden Anlage gegen eine Umfangsfläche von in den Zellenaufnahmeräumen 3 aufzunehmenden Akkuzellen konfiguriert ist. In vorteilhaften Realisierungen beinhaltet das Halterbodenteil eine Mehrzahl der bodenseitigen Zellabstützsäulen 5 in einer regelmäßigen zweidimensionalen Anordnung, z.B. wie gezeigt in einer matrixförmigen Anordnung mit Zeilen und Spalten von Zellabstützsäulen 5. In diesem Fall besitzt jeder nicht randseitige Zellenaufnahmeraum 3 vier angrenzende Zellenzwischenräume 4 bzw. Zellabstützsäulen 5 und somit vier zugeordnete Sicherungswandbereiche 5a, die jeweils von einer sich über ca. 45° bis 90° erstreckenden Teilumfangsfläche des Umfangs der Zellabstützsäulen 5 gebildet sind. In alternativen Ausführungen besitzt das Feld 7 z.B. eine hexagonale oder eine trigonale Struktur.

In entsprechenden Ausführungen weist das Halterdeckelteil 2 eine oder mehrere deckelseitige Zellabstützsäulen 6 auf, die sich jeweils von einer Deckelebene 2a des Halterdeckelteils 2 axial in eine der Zellenzwischenräume 4 hinein erstrecken und einen umfangsseitigen Sicherungswandbereich 6a aufweisen, der zur axial und radial lagesichernden Anlage gegen eine Umfangsfläche von in den Zellenaufnahmeräumen 3 aufzunehmenden Akkuzellen konfiguriert ist. In vorteilhaften Realisierungen beinhaltet das Halterdeckelteil 2 eine Mehrzahl der deckelseitigen Zellabstützsäulen 6 in einer vorzugsweise regelmäßigen zweidimensionalen Anordnung, z.B. wie gezeigt in einer matrixförmigen Anordnung aus Zeilen und Spalten von Zellabstützsäulen 6, wobei diese Anordnung in der Regel derjenigen der bodenseitigen Zellabstützsäulen 5 entspricht, wofür folglich die gleichen oben genannten Realisierungsalternativen bestehen.

In einer vorteilhaften Ausführungsform sind sowohl die eine oder vorzugsweise mehreren bodenseitigen Zellabstützsäulen 5 am Halterbodenteil 1 als auch die eine oder vorzugsweise mehreren deckelseitigen Zellabstützsäulen 6 am Halterdeckelteil 2 mit der erwähnten Charakteristik ihres umfangsseitigen Sicherungswandbereichs 5a, 6a vorhanden. In alternativen Ausführungen sind Zellabstützsäulen mit dieser speziellen Konfiguration eines umfangsseitigen Sicherungswandbereichs nur am Halterbodenteil 1 oder nur am Halterdeckelteil 2 vorgesehen.

In entsprechenden Ausführungen des Zellhalteraufbaus besitzen die Zellenaufnahmeräume 3 in einem mittleren Bereich 7a des Feldes 7 eine größere, mittige, lichte Aufnahmeweite Wm und in einem peripheren Bereich 7b des Feldes 7 eine demgegenüber kleinere, periphere, lichte Aufnahmeweite Wp, wie im gezeigten Beispiel. Zusätzlich weist in entsprechenden Ausführungen das Halterbodenteil 1 die bodenseitigen Zellabstützsäulen 5 mit der erwähnten Charakteristik ihres Sicherungswandbereichs 5a oder alternativ herkömmliche Zellabstützsäulen oder weiter alternativ keine Zellabstützsäulen auf. Analog weist in entsprechenden Ausführungen zusätzlich das Halterdeckelteil die Zellabstützsäulen 6 mit der erwähnten Charakteristik ihres Sicherungswandbereichs 6a oder alternativ herkömmliche Zellabstützsäulen oder weiter alternativ keine Zellabstützsäulen auf. Die größere Aufnahmeweite Wm im mittleren Feldbereich 7a kann den Effekt kompensieren, dass sich die Zellaufnahmeräume 3 im mittleren Feldbereich 7a durch das Einbringen der Akkuzellen in die Zellenaufnahmeräume 3 etwas stärker verengen können als im peripheren Feldbereich 7b, da die Zellenaufnahmeräume im mittleren Feldbereich 7a von mehr anderen Zellaufnahmeräumen 3 umgeben sind als die Zellenaufnahmeräume 3 im peripheren Feldbereich 7b und sich geringfügige laterale Verformungen der Zellabstützsäulen durch das Einsetzen der Akkuzellen daher im mittleren Feldbereich 7a etwas stärker summieren können als im peripheren Feldbereich 7b. Die Grenze zwischen dem mittleren Feldbereich 7a und dem peripheren Feldbereich 7b kann je nach Bedarf geeignet festgelegt werden, d.h. der peripheren Feldbereich 7b beinhaltet die randseitigen Zellenaufnahmeräume 3 und optional weitere angrenzende Zellenaufnahmeräume 3 bis zu einem vorgebbaren Maximalabstand vom Rand des Feldes 7, der mittlere Feldbereich 7a umfasst die übrigen, inneren Zellenaufnahmeräume 3. Die Grenze kann alternativ auch gestuft bzw. gleitend gewählt werden.

Die spezifische Konfiguration des Sicherungswandbereichs 5a ermöglicht es, dass die Akkuzellen, wenn sie in den zum Halterbodenteil 1 bzw. zum Halterdeckelteil 2 gehörigen Teil der Zellenaufnahmeräume 3 eingefügt werden, von der bzw. den bodenseitigen oder deckelseitigen Zellabstützsäulen 5, 6 in ihrer Lage axial und radial gesichert werden können, so dass die Akkuzellen radial spielfrei und gegen unerwünschtes axiales Herausbewegen gesichert gehalten werden können, auch bereits in einem Vormontagezustand, bei dem die Akkuzellen in das Halterbodenteil 1 oder das Halterdeckelteil 2 eingesetzt sind, das Halterbodenteil 1 und das Halterdeckelteil 2 jedoch noch nicht unter Bildung eines entsprechenden Akkuzellenblocks miteinander verbunden sind.

In entsprechenden Ausführungen ist wenigstens eine der bodenseitigen Zellabstützsäulen 5 wenigstens in einem ihren Sicherungswandbereich 5a enthaltenden axialen Teilbereich domförmig oder kegelstumpfförmig ausgebildet und/oder verbreitert sich konisch in Richtung der Bodenebene 1a des Halterbodenteils 1, d.h. ein Außendurchmesser Ad der Zellabstützsäulen 5 nimmt in dieser Richtung zu. Im gezeigten Beispiel ist dies bei allen bodenseitigen Zellabstützsäulen 5 der Fall, in alternativen Ausführungen für keine oder nur für einen Teil der bodenseitigen Zellabstützsäulen 5.

In entsprechenden Ausführungen ist wenigstens eine der deckelseitigen Zellabstützsäulen 6 wenigstens in einem ihren Sicherungswandbereich 6a enthaltenden axialen Teilbereich domförmig oder kegelstumpfförmig ausgebildet und/oder verbreitert sich konisch in Richtung der Deckelebene 2a des Halterdeckelteils 2. Im gezeigten Beispiel ist dies für alle deckelseitigen Zellabstützsäulen 6 der Fall, in alternativen Ausführungen für keine oder nur für einen Teil der deckelseitigen Zellabstützsäulen 6.

Diese konische bzw. dom- oder kegelstumpfförmige Gestaltung der Zellabstützsäulen 5, 6 erleichtert ein zentriertes Einsetzen der Akkuzellen in ihre Zellenaufnahmeräume und kann auch das lagesichernde Anlegen der Zellabstützsäulen gegen die Umfangsfläche der eingesetzten Akkuzellen unterstützen.

In entsprechenden Ausführungen weist wenigstens eine der bodenseitigen Zellabstützsäulen 5 eine Hohlsäulenstruktur auf, und ihr Sicherungswandbereich 5a liegt zur Bodenebene 1a des Halterbodenteils 1 hin frei. Im gezeigten Ausführungsbeispiel ist dies für alle bodenseitigen Zellabstützsäulen 5 der Fall, in alternativen Ausführungen für keine oder nur für einen Teil der bodenseitigen Zellabstützsäulen 5.

In entsprechenden Ausführungen weist wenigstens eine der deckelseitigen Zellabstützsäulen 6 eine Hohlsäulenstruktur auf, und ihr Sicherungswandbereich 6a liegt zur Deckelebene 2a des Halterdeckelteils 2 hin frei. Im gezeigten Beispiel ist dies für alle deckelseitigen Zellabstützsäulen 6 der Fall, in alternativen Ausführungen für keine oder nur für einen Teil der deckelseitigen Zellabstützsäulen 6.

Die Hohlsäulenstruktur und das Freiliegen des Sicherungswandbereichs 5a, 6a zur Bodenebene 1a des Halterbodenteils 1 bzw. zur Deckelebene 2a des Halterdeckelteils 2 ist einem radial elastischen Nachgeben des Sicherungswandbereichs förderlich, wodurch der Sicherungswandbereich durch eine eingefügte Akkuzelle radial etwas aus dem Zellaufnahmeraum 3 elastisch herausgedrückt werden kann, um sich dann mit elastisch rückstellendem Druck gegen den Umfang der Akkuzelle anzulegen. Dies ist mit geringem Fertigungsaufwand realisierbar und für die Bereitstellung einer hohen Lagesicherungskraft gegen axiales und radiales Wegbewegen der Akkuzelle vom Halterbodenteil 1 bzw. vom Halterdeckelteil 2 von Vorteil.

Das Freiliegen des Sicherungswandbereichs 5a, 6a zur Bodenebene 1a bzw. Deckelebene 2a kann beispielsweise dadurch realisiert sein, dass die Bodenebene 1a bzw. die Deckelebene 2a im Bereich des Sicherungswandbereichs 5a, 6a ausgespart ist und/oder dass der Sicherungswandbereich 5a, 6a angrenzend an die Bodenebene 1a bzw. Deckelebene 2a ausgespart ist. Im gezeigten Ausführungsbeispiel weist dazu ein Teil der Sicherungswandbereiche 5a, 6a zur Bodenebene 1a bzw. zur Deckelebene 2a hin eine Aussparung 17a, 17b auf, für einen übrigen Teil der Sicherungswandbereiche 5a, 6a ist die Bodenebene 1a bzw. die Deckelebene 2a im entsprechenden Bereich angrenzend an den Sicherungswandbereich 5a, 6a mit einer Bodenaussparung 18a bzw. Deckelaussparung 18b versehen.

In entsprechenden Ausführungen weist wenigstens eine der bodenseitigen Zellabstützsäulen 5 in ihrem Sicherungswandbereich 5a einen zu einem der Zellenaufnahmeräume 3 hin radial abstehenden Anlagevorsprung 8a auf. Im gezeigten Beispiel ist dies für alle bodenseitigen Zellabstützsäulen 5 der Fall, in alternativen Realisierungen für keine oder nur einen Teil der bodenseitigen Abstützsäulen 5.

In entsprechenden Ausführungen weist wenigstens eine der deckelseitigen Zellabstützsäulen 6 in ihrem Sicherungswandbereich 6a einen zu einem der Zellenaufnahmeräume 3 hin radial abstehenden Anlagevorsprung 8b auf. Im gezeigten Beispiel ist dies für alle deckelseitigen Zellabstützsäulen 6 der Fall, in alternativen Realisierungen für keine oder nur einen Teil der deckelseitigen Zellabstützsäulen 6.

In vorteilhaften Realisierungen befindet sich der Anlagevorsprung 8a, 8b wie im gezeigten Beispiel im direkt der Bodenebene 1a bzw. der Deckelebene 2a benachbarten Abschnitt des Sicherungswandbereichs 5a, 6a, wo der Sicherungswandbereich 5a, 6a zur Bodenebene 1a bzw. Deckelebene 2a hin freiliegt, wobei der Anlagevorsprung 8a, 8b zur Bodenebene 1a bzw. Deckelebene 2a hin im Wesentlichen bündig mit der angrenzenden Säulenmantelfläche des Sicherungswandbereichs 5a, 6a axial abschließt. In vorteilhaften Ausführungen ist der jeweilige Anlagevorsprung 8a, 8b an seiner radialen Außenseite in axialer Richtung sich zur Bodenebene 1a bzw. Deckelebene 2a hin konisch verbreitert gebildet, wie im gezeigten Beispiel. Dies kann das Einsetzen der Akkuzellen bzw. das Aufgleiten des Anlagevorsprungs 8a, 8b auf den Umfang der Akkuzelle beim Einsetzen der Akkuzelle in den Zellenaufnahmeraum 3 und auch das form- oder kraftschlüssige, z.B. verkrallende oder verklemmende, Zusammenwirken des Anlagevorsprungs 8a, 8b, insbesondere einer der Aussparung 17a, 17b, 18a, 18b zugewandten Unterkante des Anlagevorsprungs 8a, 8b, mit dem Akkuzellenumfang bzw. der Akkuzellen-Mantelfläche fördern.

In entsprechenden Ausführungsformen weist wenigstens eine der bodenseitigen Zellabstützsäulen 5 und/oder der deckelseitigen Zellabstützsäulen 6 in dem peripheren Feldbereich 7b eine größere radiale Abmessung, z.B. in Form des Außendurchmessers Ad, auf als wenigstens eine der bodenseitigen Zellabstützsäulen 5 und/oder der deckelseitigen Zellabstützsäulen 6 im mittleren Feldbereich 7a. Dies kann für alle bodenseitigen und deckelseitigen Zellabstützsäulen 5, 6 im peripheren Feldbereich 7b bzw. mittleren Feldbereich 7a gelten, in alternativen Ausführungen nur für einen Teil derselben. Damit lässt sich in konstruktiv vorteilhafter Weise für den mittleren Feldbereich 7a die bei Bedarf gewünschte größere lichte Aufnahmeweite Wm der Zellenaufnahmeräume 3 im Vergleich zur Aufnahmeweite Wp der Zellenaufnahme 3 im peripheren Feldbereich 7b bereitstellen.

Alternativ oder zusätzlich weist in vorteilhaften Realisierungen wie im gezeigten Ausführungsbeispiel wenigstens der Anlagevorsprung wenigstens einer der bodenseitigen Zellabstützsäulen 5 und/oder der deckelseitigen Zellabstützsäulen 6 in dem peripheren Feldbereich 7b eine größere radiale Abmessung auf als der Anlagevorsprung wenigstens einer der bodenseitigen Zellabstützsäulen 5 und/oder der deckelseitigen Zellabstützsäulen 6 im mittleren Feldbereich 7a. Damit lässt sich in konstruktiv einfacher Weise für die bodenseitigen und/oder deckelseitigen Zellabstützsäulen 5, 6 im peripheren Feldbereich 7b bei Bedarf die gewünschte größere radiale Abmessung verglichen mit denjenigen im mittleren Feldbereich 7a erzielen.

In entsprechenden Ausführungen besitzt wenigstens eine der bodenseitigen Zellabstützsäulen 5 eine größere Säulenlänge SL als die deckelseitigen Zellabstützsäulen 6. Im gezeigten Ausführungsbeispiel ist dies für alle bodenseitigen Zellabstützsäulen 5 der Fall, in alternativen Ausführungen für keine oder nur einen Teil der bodenseitigen Zellabstützsäulen 5. Die Wahl einer größeren Säulenlänge SL für die bodenseitigen Zellabstützsäulen 5 kann die Vormontage der Akkuzellen erleichtern, die in diesem Fall vorzugsweise am Halterbodenteil vormontiert, d.h. in dessen Teil der Zellenaufnahmeräume 3 eingefügt, werden. Sowohl das Einfügen der Akkuzellen als auch deren spielfreies Festhalten bis zur endgültigen Montage von Halterbodenteil 1 und Halterdeckelteil 2 kann durch die längeren bodenseitigen Zellabstützsäulen 5 begünstigt werden.

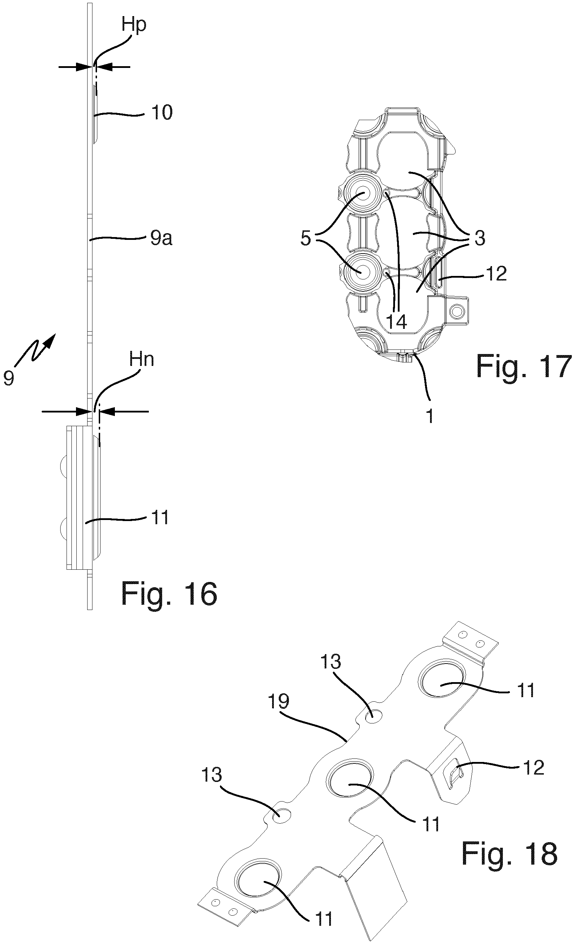

In einer entsprechenden Ausführungsform des Zellhalteraufbaus sind die Zellenaufnahmeräume 3 wie im gezeigten Ausführungsbeispiel zur polrichtungsunabhängig axial lagegleichen Aufnahme der Akkuzellen eingerichtet. Der Zellhalteraufbau umfasst mindestens einen plattenförmigen Zellverbinder 9, der am Halterbodenteil 1 oder am Halterdeckelteil 2 montierbar ist und jeweils mindestens eine positive Polkontaktzone 10 und mindestens eine negative Polkontaktzone 11 aufweist, die mit unterschiedlicher Kontaktzonenhöhe Hp, Hn von einer Plattenebene 9a des Zellverbinders 9 abstehen, wie z.B. aus Fig. 16 ersichtlich. Im gezeigten Beispiel erstreckt sich der jeder dieser Zellverbinder über sechs in einem 2x3-Teilfeld angeordnete Zellenaufnahmeräume 3. Korrespondierend dazu ist das Feld 7 durch Abtrennwände 1b, 2b am Halterbodenteil 1 und/oder am Halterdeckelteil 2 in 2x3-Teilfelder unterteilt.

Mit einer solchen Charakteristik des Zellhalteraufbaus ist es möglich, die Akkuzellen bereits gruppenweise mit entgegengesetzten Polrichtungen in die Zellenaufnahmeräume 3 im Wesentlichen axial lagegleich einzubringen, wobei unterschiedliche Polkontaktzonenhöhen durch den Zellverbinder ausgeglichen werden. Im gezeigten Beispiel werden die Akkuzellen einer Reihe jeweils polrichtungsgleich und gegenüber denjenigen einer direkt benachbarten Reihe mit polrichtungsumgekehrt eingesetzt.

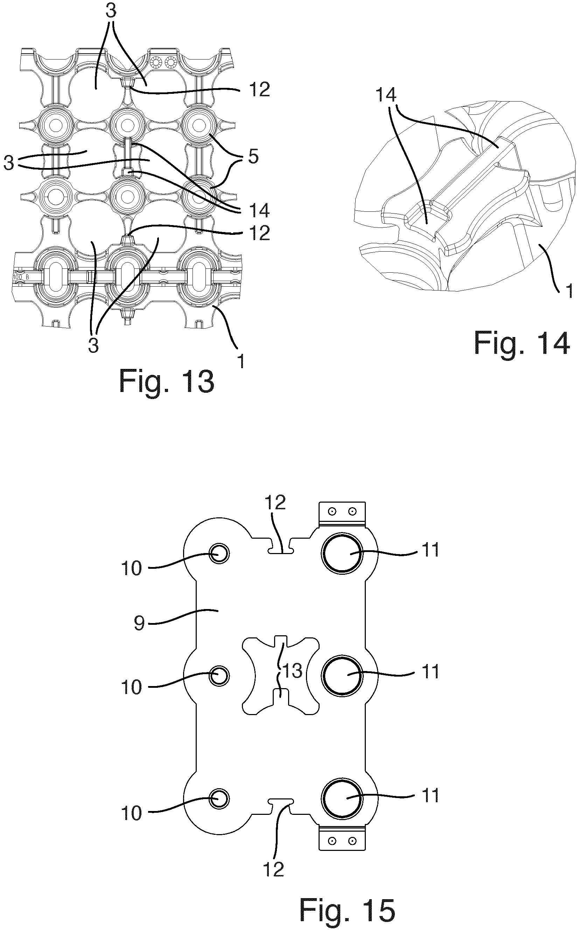

In vorteilhaften Ausführungen ist eine Mehrzahl von baugleichen Zellverbindern 9 vorgesehen, die wahlweise am Halterbodenteil 1 oder am Halterdeckelteil 2 montierbar sind. Diese Möglichkeit der Verwendung von baugleichen Zellverbindern trägt zu einem geringen Fertigungs- und Montageaufwand bei. So ist beim gezeigten Ausführungsbeispiel grundsätzlich nur ein einziger Typ von Zellverbinder 9, wie er beispielsweise in Fig. 15 gezeigt ist, für den Zellhalteraufbau erforderlich, optional ergänzt durch einen randseitigen Zellverbinder 19, wie er in Fig. 18 veranschaulicht ist.

In entsprechenden Realisierungen ist der jeweilige Zellverbinder 9, 19 mittels einer Klemm- und/oder Schnappverbindung 12 am Halterbodenteil 1 oder am Halterdeckelteil 2 montierbar. Auch dies fördert eine einfache Montage des Zellhalteraufbaus.

In vorteilhaften Ausführungen sind korrespondierende Positioniermarken 13,14 am Zellverbinder 9, 19 einerseits und am Halterbodenteil 1 und/oder am Halterdeckteil 2 andererseits zur positionsrichtigen Montage des Zellverbinders 9, 19 am Halterbodenteil 1 bzw. am Halterdeckelteil 2 vorgesehen. Dies vereinfacht das Anbringen des Zellverbinders 9, 19 am Halterbodenteil 1 bzw. am Halterdeckteil 2, indem die Positioniermarken 13, 14 eine Fehlpositionierung ausschließen.

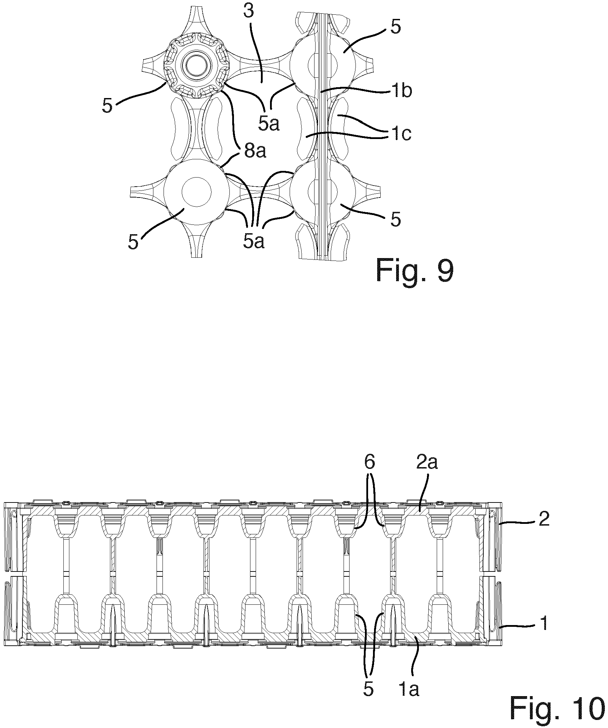

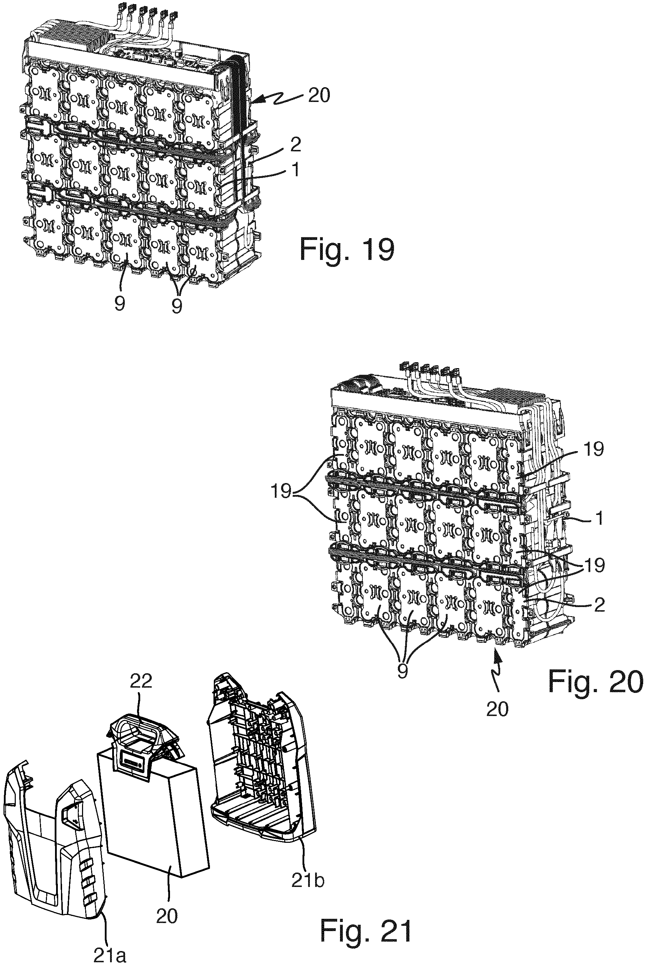

Die Fig. 19 und 20 veranschaulichen einen Akkuzellenblock 20, wie er in einem Akkupack verwendbar ist und aus dem Zusammenbau des in den Fig. 1 bis 18 gezeigten Zellhalteraufbaus nebst eingesetzten Akkuzellen ergibt. Zum Zusammenbau werden zunächst Akkuzellen 15 z.B. in das Halterbodenteil 1, d.h. in dessen Teil der Zellenaufnahmeräume 3, eingefügt, wobei sie von deren Zellabstützsäulen 5 zentriert sowie axial und radial lagegesichert gehalten werden. Dann wird das Halterdeckelteil 2 aufgelegt und mit dem Halterbodenteil 1 zusammengepresst, wodurch die Akkuzellen 15 axial am Halterbodenteil 1 und am Halterdeckelteil 2 abgestützt ein eingepresst gehalten sind, wobei sie zusätzlich durch die Zellabstützsäulen 6 des Halterdeckelteils 2 insbesondere auch radial lagegesichert sind. Die Fig. 10 bis 12 veranschaulichen den zusammengebauten Zustand in drei unterschiedlichen Schnittansichten. Anschließend werden die Zellverbinder 9, 19 montiert. Zur axialen Abstützung der Akkuzellen 15 weisen das Halterbodenteil 1 und das Halterdeckelteil 2 im Bereich der Halterbodenebene 1a bzw. der Halterdeckelebene 2a jeweilige Abstützflächen auf, die im gezeigten Beispiel von teilringförmigen Stützringflächen 1c, 2c gebildet sind. In alternativen Ausführungen haben die Abstützflächen eine andere Form, z.B. können sie als geschlossene Kreisscheibenfläche oder durch Stützstege gebildet sein, die sich auf Höhe der Halterbodenebene 1a bzw. der Halterdeckelebene 2a vom Bereich der Zellenzwischenräume 4 radial in den Bereich der Zellenaufnahmeräume 3 erstrecken.

Fig. 21 veranschaulicht schematisch einen Akkupack, der mit einem erfindungsgemäßen Zellhalteraufbau und einer Mehrzahl von durch den Zellhalteraufbau gehaltenen Akkuzellen ausgerüstet ist, hier speziell in Form des nur schematisch gezeigten Akkuzellenblocks 20 nach Art der Fig. 19 und 20, wobei der Akkuzellenblock 20 in einem aus zwei Gehäusehälften 21a, 21b bestehenden Akkupackgehäuse aufgenommen ist. Ein Griffteil 22 mit geräteabhängigem Elektronikteil vervollständigt den Akkupack. Der Akkupack kann insbesondere zur elektrischen Energieversorgung eines handgeführten Elektrogerätes benutzt werden, wie eines hand- oder rückgetragenen oder bodengeführten, elektrisch angetriebenen Garten- oder Forstbearbeitungsgerätes.

Wie die obigen Ausführungsbeispiele deutlich machen, stellt die Erfindung einen vorteilhaften Zellhalteraufbau zur Halterung einer Mehrzahl von Akkuzellen für einen Akkupack und einen entsprechenden Akkupack zur Verfügung, wobei sich der Zellhalteraufbau durch geringen Fertigungsaufwand, einfache Montage und sicheres Halten der Akkuzellen auszeichnet.

## Patentansprüche

1. Zellhalteraufbau zur Halterung einer Mehrzahl von Akkuzellen für einen Akkupack, umfassend
- ein Halterbodenteil (1) und ein mit diesem verbindbares Halterdeckelteil (2), die zusammen ein Feld (7) von Zellenaufnahmeräumen (3) und zwischenliegenden Zellenzwischenräumen (4) bilden,
**dadurch gekennzeichnet, dass**
- das Halterbodenteil (1) eine oder mehrere bodenseitige Zellabstützsäulen (5) aufweist, die sich jeweils von einer Bodenebene (1a) des Halterbodenteils (1) axial in einen der Zellenzwischenräume (4) hinein erstrecken und einen umfangsseitigen Sicherungswandbereich (5a) aufweisen, der zur axial und radial lagesichernden Anlage gegen eine Umfangsfläche von in den Zellenaufnahmeräumen (3) aufzunehmenden Akkuzellen konfiguriert ist, und/oder
- das Halterdeckelteil (2) eine oder mehrere deckelseitige Zellabstützsäulen (6) aufweist, die sich jeweils von einer Deckelebene (2a) des Halterdeckelteils (2) axial in einen der Zellenzwischenräume (4) hinein erstrecken und einen umfangsseitigen Sicherungswandbereich (6a) aufweisen, der zur axial und radial lagesichernden Anlage gegen eine Umfangsfläche von in den Zellenaufnahmeräumen (3) aufzunehmenden Akkuzellen konfiguriert ist, und/oder
- die Zellenaufnahmeräume (3) in einem mittleren Bereich (7a) des Feldes (7) eine größere, mittige, lichte Aufnahmeweite (Wm) und in einem peripheren Bereich (7b) des Feldes (7) eine kleinere, periphere, lichte Aufnahmeweite (Wp) besitzen.

2. Zellhalteraufbau nach Anspruch 1, weiter **dadurch gekennzeichnet, dass**
- wenigstens eine der bodenseitigen Zellabstützsäulen (5) wenigstens in einem ihren Sicherungswandbereich (5a) enthaltenden axialen Teilbereich domförmig oder kegelstumpfförmig ausgebildet ist und/oder sich in Richtung der Bodenebene (1a) des Halterbodenteils (1) konisch verbreitert und/oder
- wenigstens eine der deckelseitigen Zellabstützsäulen (6) wenigstens in einem ihren Sicherungswandbereich (6a) enthaltenden axialen Teilbereich domförmig oder kegelstumpfförmig ausgebildet ist und/oder sich in Richtung der Deckelebene (2a) des Halterdeckelteils (2) konisch verbreitert.

3. Zellhalteraufbau nach Anspruch 1 oder 2, weiter **dadurch gekennzeichnet, dass**
- wenigstens eine der bodenseitigen Zellabstützsäulen (5) eine Hohlsäulenstruktur aufweist und ihr Sicherungswandbereich (5a) zur Bodenebene (1a) des Halterbodenteils (1) hin freiliegt und/oder
- wenigstens eine der deckelseitigen Zellabstützsäulen (6) eine Hohlsäulenstruktur aufweist und ihr Sicherungswandbereich (6a) zur Deckelebene (2a) des Halterdeckelteils (2) hin freiliegt.

4. Zellhalteraufbau nach einem der Ansprüche 1 bis 3, weiter **dadurch gekennzeichnet, dass**
- wenigstens eine der bodenseitigen Zellabstützsäulen (5) in ihrem Sicherungswandbereich (5a) einen zu einem der Zellenaufnahmeräume (3) hin radial abstehenden Anlagevorsprung (8a) aufweist und/oder
- wenigstens eine der deckelseitigen Zellabstützsäulen (6) in ihrem Sicherungswandbereich (6a) einen zu einem der Zellenaufnahmeräume (3) hin radial abstehenden Anlagevorsprung (8b) aufweist.

5. Zellhalteraufbau nach einem der Ansprüche 1 bis 4, weiter **dadurch gekennzeichnet, dass** zur Bereitstellung der größeren lichten Aufnahmeweite (Wm) der Zellenaufnahmeräume (3) in dem mittleren Bereich (7a) des Feldes (7) gegenüber der kleineren lichten Aufnahmeweite (Wp) der Zellenaufnahmeräume (3) in dem peripheren Bereich (7b) des Feldes (7) wenigstens eine der bodenseitigen Zellabstützsäulen (5) und/oder der deckelseitigen Zellabstützsäulen (6) in dem peripheren Bereich (7b) des Feldes (7) eine größere radiale Abmessung aufweist als wenigstens eine der bodenseitigen Zellabstützsäulen (5) und/oder der deckelseitigen Zellabstützsäulen (6) in dem mittleren Bereich (7a) des Feldes (7).

6. Zellhalteraufbau nach Anspruch 5, weiter **dadurch gekennzeichnet, dass** der Anlagevorsprung wenigstens einer der bodenseitigen Zellabstützsäulen (5) und/oder der deckelseitigen Zellabstützsäulen (6) in dem peripheren Bereich (7b) des Feldes (7) eine größere radiale Abmessung aufweist als der Anlagevorsprung wenigstens einer der bodenseitigen Zellabstützsäulen (5) und/oder der deckelseitigen Zellabstützsäulen (6) in dem mittleren Bereich (7a) des Feldes (7).

7. Zellhalteraufbau nach einem der Ansprüche 1 bis 6, weiter **dadurch gekennzeichnet, dass** wenigstens eine der bodenseitigen Zellabstützsäulen (5) eine größere Säulenlänge (SL) besitzt als die deckelseitigen Zellabstützsäulen (6).

8. Zellhalteraufbau zur Halterung einer Mehrzahl von Akkuzellen für einen Akkupack, insbesondere nach einem der Ansprüche 1 bis 7, umfassend
- ein Halterbodenteil (1) und ein mit diesem verbindbares Halterdeckelteil (2), die zusammen ein Feld (7) von Zellenaufnahmeräumen (3) und zwischenliegenden Zellenzwischenräumen (4) bilden,
**dadurch gekennzeichnet, dass**
- die Zellenaufnahmeräume (3) zur polrichtungsunabhängig axial lagegleichen Aufnahme der Akkuzellen eingerichtet sind und
- wenigstens ein plattenförmiger Zellverbinder (9) vorgesehen ist, der am Halterbodenteil (1) oder am Halterdeckelteil (2) montierbar ist und jeweils mindestens eine positive Polkontaktzone (10) und mindestens eine negative Polkontaktzone (11) aufweist, die mit unterschiedlicher Kontaktzonenhöhe (Hp, Hn) von einer Plattenebene (9a) des Zellverbinders (9) abstehen.

9. Zellhalteraufbau nach Anspruch 8, weiter **dadurch gekennzeichnet, dass** eine Mehrzahl von baugleichen Zellverbindern (9) vorgesehen ist, die wahlweise am Halterbodenteil (1) oder am Halterdeckelteil (2) montierbar sind.

10. Zellhalteraufbau nach Anspruch 8 oder 9, weiter **dadurch gekennzeichnet, dass** der jeweilige Zellverbinder (9) mittels einer Klemm- und/oder Schnappverbindung (12) am Halterbodenteil (1) oder am Halterdeckelteil (2) montierbar ist.

11. Zellhalteraufbau nach einem der Ansprüche 8 bis 10, weiter **dadurch gekennzeichnet, dass** korrespondierende Positioniermarken (13, 14) am Zellverbinder (9) einerseits und am Halterbodenteil (1) und/oder am Halterdeckelteil (2) andererseits zur positionsrichtigen Montage des Zellverbinders (9) am Halterbodenteil (1) oder am Halterdeckelteil (2) vorgesehen sind.

12. Akkupack, insbesondere zur elektrischen Energieversorgung eines handgeführten Elektrogerätes, mit
- einem Zellhalteraufbau nach einem der Ansprüche 1 bis 11 und
- einer Mehrzahl von durch den Zellhalteraufbau gehaltenen Akkuzellen (15).
